(19) Europäisches Patentamt
European Patent Office
Office européen des brevets

(11) **EP 3 846 087 A1**

(12) **DEMANDE DE BREVET EUROPEEN**

(43) Date de publication:
**07.07.2021 Bulletin 2021/27**

(51) Int Cl.:
**G06N 5/00** *(2006.01)*    **G06N 20/00** *(2019.01)*

(21) Numéro de dépôt: **20218023.8**

(22) Date de dépôt: **31.12.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **31.12.2019  FR 1915812**

(71) Demandeur: **BULL SAS**
**78340 Les Clayes sous Bois (FR)**

(72) Inventeur: **SGHIOUER, Kaoutar**
**60200 Compiègne (FR)**

(74) Mandataire: **Novagraaf Technologies**
**Bâtiment O2**
**2, rue Sarah Bernhardt**
**CS90017**
**92665 Asnières-sur-Seine Cedex (FR)**

(54) **PROCEDE ET SYSTEME DE SELECTION D'UN MODELE D'APPRENTISSAGE AU SEIN D'UNE PLURALITE DE MODELES D'APPRENTISSAGE**

(57)    L'invention porte sur procédé de sélection d'un modèle d'apprentissage défini notamment par des paramètres et des hyperparamètres parmi une pluralité de modèles d'apprentissage, mis en œuvre par un dispositif informatique, ledit dispositif informatique comprenant un module de sélection de modèle et un référentiel de modèle comportant une pluralité de séries d'instructions chacune correspondant à un modèle d'apprentissage et chacune comportant des valeurs des hyperparamètres, ledit procédé comprenant une étape de sélection d'un modèle lorsque la valeur de performance de la prédiction et la valeur de classification sont supérieures à des secondes valeurs seuils prédéterminées et la valeur des hyperparamètres supérieure à une valeur seuil prédéfinie.

FIG. 1

EP 3 846 087 A1

**Description**

L'invention concerne le domaine de l'analyse des données, et plus particulièrement la sélection d'un modèle au sein d'une pluralité de modèles, pouvant être utilisés notamment par la suite pour des phases de modélisation ou d'exploitation avancées des données. L'invention concerne un procédé de sélection d'un modèle au sein d'une pluralité de modèles ainsi qu'un système de sélection d'un modèle au sein d'une pluralité de modèles. L'invention se rapporte également à un module de sélection d'un modèle au sein d'une pluralité de modèles.

**[Art antérieur]**

Avec l'expansion des activités liées au Big Data, le métier de Data Scientist s'est développé de façon importante ces dernières années. Ce métier, qui a pour objet de tirer profit des grandes quantités de données disponibles dans les sociétés et les grandes organisations, s'appuie sur des techniques statistiques et des outils informatiques variés, mais reste aujourd'hui largement « artisanal ». Chaque organisation et chaque jeu de données posent des problèmes spécifiques auxquels les Data Scientists tentent de répondre par des solutions « sur mesure ».

Cet état des choses est notamment dû à la très grande hétérogénéité des données disponibles, à leur caractère souvent incomplet ainsi qu'aux erreurs et incohérences contenues dans presque tous les jeux de données de taille significative. Afin de prendre en compte ces aspects, les Data Scientists, avant de rentrer dans des phases de modélisation et d'exploitation avancée des données, doivent d'abord passer par une phase de prétraitement et d'analyse préliminaire de ces dernières (nettoyage, analyse exploratoire), mais également par la sélection d'un modèle représentant le plus fidèlement les données. Cette étape nécessite de faire appel à l'expérience du Data Scientist afin d'élire le meilleur modèle, et présente donc un biais de par sa subjectivité et de par son manque de fiabilité. Par ailleurs , ces tâches s'avèrent extrêmement lourdes et chronophages. Ainsi, comme le souligne l'étude menée par Forbes en 2016 et relayée dans l'article de G. PRESS, le Data Scientist passe 80% de son temps dans ce processus de prétraitement et d'analyse des données et 20% seulement dans l'algorithmique pure.

La phase de sélection d'un modèle, représente une part considérable du travail des Data Scientists, qui repose aujourd'hui essentiellement sur la mise en œuvre non automatisée et/ou systématisée de différents outils, et sans cadre fédérateur pour une comparaison aisée et pertinente des résultats obtenus sur un jeu de données suite à l'application de différentes techniques d'analyse, le plus souvent faisant appel à des estimations et des prévisions.

En 2011, les travaux de S. KANDEL et al. ont donné lieu au développement de l'outil Wrangler, puis à la création de la société Trifacta qui développe un outil de prétraitement performant [KANDEL, 2011]. Néanmoins, cet outil permet uniquement de faciliter les traitements de type textuels (utilisation d'expressions régulières par exemple) ; exploiter les données issues des bases de données (éclatements, regroupements de colonnes, etc.) ; analyser syntaxiquement les messages.

Il est d'ailleurs comparé et évalué en termes de temps par rapport aux mêmes traitements effectués par Excel. De fait, il s'agit là uniquement d'un outil permettant de prétraiter des données brutes mais qui n'est aucunement capable d'effectuer des statistiques sur les données traitées. Précisément pour cette raison, les auteurs concluent dans leurs perspectives l'intérêt d'inclure d'autres techniques d'analyse, dont des techniques statistiques.

Le programme open source OpenRefine, développé par Google est notamment décrit par R. Verborgh et M. De Wilde [VERBORGH, 2013]. Cependant, il s'agit d'un outil permettant de traiter des données désordonnées, dans le but de les nettoyer et de les convertir d'un format à un autre. Dans ce cas également, l'outil ne réalise aucune analyse statistique des données injectées.

Le langage R permet de réaliser des calculs statistiques et également de développer des applications de Machine Learning. Il intègre de nombreux modules qui permettent au Data Scientist de réaliser facilement ce type de traitements ainsi que des prétraitements sur les données. Il permet ainsi : la manipulation des données, via de nombreuses bibliothèques de manipulation de données ; la visualisation de données, technique implémentée dans l'outil ggplot2 par exemple présenté par W. HADLEY [HADLEY, 2016]. Celui-ci permet de construire un ensemble d'objets géométriques (« geoms ») à partir d'un jeu de données restreint. Cependant, il n'existe pas d'interface simple d'utilisation, autre que le langage de programmation lui-même, rapide et accessible permettant à n'importe quel utilisateur maîtrisant ou non le langage informatique de mettre en œuvre des techniques d'apprentissage supervisé ou non supervisé.

Comme le langage R, le langage Python est très répandu dans le monde scientifique et dispose de librairies dédiées à l'analyse de données, notamment : Pandas , qui facilite la manipulation de données, par le biais de structures de données adaptées et d'opérations de nettoyage, de formatage ou d'autres prétraitements [MCKINNEY, 2011] ; Scikit-learn (parfois abrégé sklearn), qui fournit différents algorithmes de classification, régression et partitionnement (en anglais, clustering) pour l'analyse statistique [PEDREGOSA, 2011].

Toutefois, selon les valeurs à traiter, les algorithmes ne se comportent pas de la même manière et cela influe sur le résultat qu'ils retournent. Lorsque plusieurs méthodes d'estimation sont a *priori* pertinentes, il n'est donc pas garanti qu'elles fournissent le même résultat. De ce point de vue, il paraitrait utile de disposer de méthodes ou d'outils permettant de sélectionner le meilleur modèle lorsque les algorithmes sont les plus performants.

Comme cela a été mentionné, l'apprentissage automatisé constitue une part majeure de la quatrième révolution industrielle. Ainsi, les processus industriels sont de plus en plus fréquemment améliorés via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données. Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, un prétraitement non adapté de cette multitude de source de données peut entrainer une diminution de la réactivité des processus de contrôle ou pire un manque de sensibilité.

La conclusion globale est le constat du manque d'outils capables de réaliser les tâches de prétraitement et d'analyse de manière automatisée/systématisée. En effet, les outils de l'art antérieur se limitent à des prétraitements très basiques des données (formatage, ajouts de colonnes, etc.), sans se préoccuper de l'analyse qui en découle, rendant leur utilisation chronophage. Il est donc nécessaire de développer des procédés et des systèmes moins chronophages que ceux existant, plus simple d'utilisation et automatisé et/ou systématisé, pouvant supporter une grande quantité de données ainsi que des données hétérogènes. Il est par ailleurs nécessaire de développer des procédé et système capables de sélectionner des modèles avec une fiabilité et une performance élevée, et dont les algorithmes sont les plus performants.

En effet, il existe un risque qu'un même jeu de données puisse être interprété différemment par plusieurs techniques, qui fournissent alors des résultats divergents, lorsque son degré de complexité d'analyse augmente. Cette complexité d'analyse peut être due : à la volumétrie du jeu de données ; aux échantillons issus d'une même population pouvant être aléatoires ou manquants ; à des erreurs ou des incohérences contenues, aux méthodes d'analyse utilisées.

Il devient alors indispensable de pouvoir juger de la pertinence des résultats fournis par les techniques d'analyses suite à leur application sur le jeu de données.

Cependant, dans le cadre de l'utilisation de modèles prédictifs entrainés via des techniques d'apprentissage, l'apparition de nouvelles variables ou encore le changement de variables, au cours du temps, non prises en compte par le modèle prédictif utilisé, rend bien souvent le modèle de prédiction obsolète. En effet, le modèle prédictif sélectionné étant basé sur des lois de probabilité permettant d'interpréter un jeu de données, l'ajout, la suppression ou le changement de variables, non prises en compte par le modèle de prédiction nécessite bien souvent une refonte du modèle de prédiction qui s'avère chronophage. Un modèle de prédiction n'étant plus adapté ne permettra donc pas d'anticiper l'apparition d'anomalies, telles que notamment des pannes ou des besoins en ressources dans le cadre de la maintenance prédictive d'infrastructures informatiques telles que des systèmes de calculs Haute-performance. La considération de données en tant que valeurs aberrantes ou bien caractéristiques d'une anomalie dans un jeu de données en lien avec une interprétation erronée du jeu de données dans le domaine de la cyber sécurité ou plus généralement de la surveillance, est particulièrement importante puisqu'elle permet la détection d'attaques ou de fraudes.

Or, aucune solution existante ne permet de s'assurer directement de la qualité et de la fiabilité d'un modèle, sans faire appel à l'expertise d'un Data Scientist et permettant de traiter automatiquement les jeux de données, notamment dans le cadre d'une application à des processus industriels. De même, actuellement, il n'existe pas de solution proposant automatiquement à l'utilisateur la méthode implémentée la plus à-même d'interpréter le jeu de données et de corréler les variables. Il incombe donc à l'utilisateur d'analyser l'ensemble des résultats fournis par les différentes méthodes pour en tirer des conclusions et choisir le modèle lui semblant le plus correspondre au jeu de données étudié.

Enfin, les solutions de l'état de l'art sont peu accessibles, en s'inscrivant dans une logique « boîte noire ». Elles s'adressent prioritairement à des experts en Data Science, que ce soit : pour la réalisation de l'ensemble des étapes de prétraitement, ou pour l'interprétation/la compréhension des résultats obtenus suite aux tests de corrélation. Les outils n'expliquent donc pas à l'utilisateur pourquoi la corrélation entre une méthode d'analyse et un jeu de données a réussi ou échoué. Par ailleurs, certains outils nécessitent de connaître/maîtriser la programmation et les langages informatiques pour être manipulés.

**[Problème technique]**

L'invention a donc pour but de remédier aux inconvénients de l'art antérieur. En particulier, l'invention a pour but de proposer un procédé de sélection d'un modèle, ledit procédé étant rapide et simple à mettre en œuvre, avec un nombre réduit d'étapes, permettant de maitriser la fiabilité, la performance et la pertinence du modèle sélectionné tout en étant simple d'utilisation. En outre, un tel procédé est automatisé et systématisé permettant une application aisée à tout processus industriel. Le procédé est également accessible pour n'importe quel utilisateur tout en étant apte à supporter une grande quantité de données dont lesdites données peuvent être hétérogènes. En outre, il est particulièrement adapté à la surveillance de processus industriels et plus particulièrement de système d'information.

L'invention a en outre pour but de proposer un système de sélection d'un modèle, ledit système étant simple et rapide d'utilisation. En outre, le système selon l'invention est accessible et capable de traiter un volume important de données. Le système selon l'invention permet également de maîtriser la fiabilité, la performance et la pertinence du modèle sélectionné.

**[Brève description de l'invention]**

A cet effet, l'invention porte sur un procédé de sélection d'un modèle d'apprentissage défini notamment par des paramètres et des hyperparamètres parmi une pluralité de modèles d'apprentissage, mis en œuvre par un dispositif informatique, ledit dispositif informatique comprenant un module de sélection de modèle et un référentiel de modèle comportant une pluralité de séries d'instructions chacune correspondant à un modèle d'apprentissage et chacune comportant des valeurs des hyperparamètres, ledit procédé comprenant :

- une étape d'évaluation de la performance de la prédiction de chaque modèle d'apprentissage, par des indicateurs de performance de prédiction,
- un traitement d'évaluation comportant une étape d'évaluation de classification, par le module de sélection de modèles, permettant de fournir, pour chaque modèle d'apprentissage, au moins une valeur de classification,
- une étape de sélection d'un modèle dont la valeur de performance et la valeur de classification sont supérieures à des premières valeurs seuils prédéterminées,
- une étape de variation des valeurs des hyperparamètres, à partir d'indicateurs d'optimisation des hyperparamètres,
- une étape de sélection d'un modèle lorsque la valeur de performance de la prédiction et la valeur de classification sont supérieures à des secondes valeurs seuils prédéterminées et la valeur des hyperparamètres supérieure à une valeur seuil prédéfinie.

Dit autrement, l'invention porte sur un procédé de sélection d'un modèle défini notamment par des paramètres et des hyperparamètres, mis en œuvre par une ressource de calcul de type ordinateur, ledit procédé comprenant une pluralité de modèles, des valeurs des hyperparamètres, lesdites valeurs étant prédéfinies avant un processus d'apprentissage, des valeurs des paramètres, lesdites valeurs étant calculées pendant l'apprentissage, par un module de sélection de modèle, ledit procédé comprenant :

- une étape d'évaluation de la performance de la prédiction de chaque modèle de la pluralité de modèle, par des indicateurs de performance de la prédiction
- une étape d'évaluation de classification, par un classifieur, permettant de fournir
- une étape de sélection d'un modèle dont la valeur de performance et la valeur de classification sont supérieures à des premières valeurs seuils prédéterminées,
- une étape de variation des valeurs des hyperparamètres, à partir d'indicateur d'optimisation des hyperparamètres, et
- une étape sélection d'un modèle lorsque les valeurs de performance de la prédiction et la valeur de classification sont supérieures à des secondes valeurs seuils prédéterminées et la valeur des hyperparamètres supérieure à une valeur seuil prédéfinie.

Dans le cadre de la quatrième révolution industrielle, les modèles d'apprentissage automatique sont de plus en plus utilisés pour résoudre divers problèmes techniques rencontrés lors de la mise en œuvre de processus industriels. Or, la méthode utilisée pour la sélection d'un modèle est essentielle pour maitriser la fiabilité, la performance et la pertinence du modèle sélectionné. Un procédé selon l'invention permet cela, avantageusement dans un cadre de sélection automatisée et systématisée permettant une application aisée à tout processus industriel.

Ainsi, en autonomie, le procédé selon l'invention permet, à partir de données très diverses, de générer sélectionner un modèle adapté. Un tel modèle sélectionné automatiquement peut ensuite être utilisé pour la surveillance d'un processus industriel.

**Selon d'autres caractéristiques optionnelles du procédé, ce dernier peut inclure facultativement une ou plusieurs des caractéristiques suivantes, seules ou en combinaison:**

- l'étape de variation des valeurs des hyperparamètres est implémentée lorsque la valeur des hyperparamètres est inférieure à la valeur seuil prédéfinie, ladite étape de variation des valeurs des hyperparamètres comprenant la mise en œuvre de :

    - une optimisation hyper-paramétrique par quadrillage ou balayage de paramètres, ou

- une optimisation hyper paramétrique par recherche aléatoire, ou
- une optimisation séquentielle basée sur un modèle.

- l'étape de variation des valeurs des hyperparamètres est implémentée lorsque la valeur des hyperparamètres est inférieure à la valeur seuil prédéfinie, ladite étape de variation des valeurs des hyperparamètres comprenant d'une optimisation séquentielle basée sur un modèle, ladite optimisation séquentielle basée sur un modèle comprend la mise en œuvre d'un Algorithme bayésien comportant :

- une étape de définition d'un espace de recherche,
- une étape d'optimisation de l'espace de recherche comprenant la caractérisation de chaque donnée de l'espace de recherche par des valeurs,
- une étape d'association à chaque donnée de l'espace de recherche optimisé d'une valeur d'optimum en fonction d'une fonction d'acquisition,
- une étape de détermination d'une donnée optimale pour laquelle la fonction d'acquisition est maximisée,
- le calcul d'une nouvelle donnée à partir de la donnée optimale et de la fonction d'acquisition maximisée,
- une étape d'implémentation de l'espace de recherche optimisée comprenant la nouvelle donnée calculée,
- la sélection des valeurs optimisées des valeurs de paramètres associées à chaque fonction de transformation en fonction des données optimisées lorsque l'espace de recherche est implémenté.

- il comprend une étape de comparaison simultanée des résultats d'analyse des différents modèles.

- il comprend en outre une étape d'élection du meilleur algorithme et sa soumission à l'utilisateur.

- le traitement d'évaluation comprend en outre une étape d'évaluation du classifieur permettant de générer un indicateur de fiabilité.

- il comprend une étape de génération automatique de modèles pour le problème étudié. Cela permet la génération d'un nouveau modèle si la performance de prédiction passe en dessous d'un seuil prédéterminé et notamment si la nature du jeu de données change sans intervention humaine.

- les paramètres sont définis à partir d'un jeu de données émis par des fournisseurs de données comportant des capteurs de production industrielle et en ce que le modèle d'apprentissage sélectionné est entrainé pour la surveillance d'un processus industriel.

- les capteurs de production industrielle comportent : des objets connectés, des capteurs machines, capteurs d'environnement et/ ou des sondes informatiques.

- le processus industriel est sélectionné parmi : un processus de production agroalimentaire, un processus de production manufacturière, un processus de synthèse chimique, un processus de conditionnement ou un processus de surveillance d'une infrastructure informatique.

- la surveillance du processus industriel correspond à la surveillance de la sécurité du processus industriel et comporte en particulier une maintenance prédictive, une détection de défaillance, une détection de fraude, et/ou une détection de cyberattaque.

L'invention porte en outre sur **un système** de sélection d'un modèle d'apprentissage défini notamment par des paramètres et des hyperparamètres parmi une pluralité de modèles d'apprentissage, ledit système comprenant une pluralité de modèles, des valeurs des hyperparamètres, lesdites valeurs étant prédéfinies avant un processus d'apprentissage, des valeurs des paramètres, lesdites valeurs étant calculées pendant l'apprentissage, ledit système comprenant un dispositif informatique comportant un module de sélection de modèle et un référentiel de modèles comportant une pluralité de séries d'instructions chacune correspondant à un modèle d'apprentissage et chacune comportant des valeurs des hyperparamètres, ledit dispositif étant configuré pour :

- évaluer la performance de la prédiction de chaque modèle d'apprentissage, par des indicateurs de performance de la prédiction,
- évaluer la classification, par le module de sélection de modèle, et fournir pour chaque modèle d'apprentissage, au moins une valeur de classification,
- sélectionner un modèle dont la valeur de performance et la valeur de classification sont supérieures à des premières valeurs seuils prédéterminées,

- varier des valeurs des hyperparamètres, à partir d'indicateurs d'optimisation des hyperparamètres,
- sélectionner un modèle lorsque la valeur de performance de la prédiction et la valeur de classification sont supérieures à des secondes valeurs seuils prédéterminées et la valeur des hyperparamètres supérieure à une valeur seuil prédéfinie.

L'invention porte en outre sur **un module** de sélection d'un modèle défini notamment par des paramètres et des hyperparamètres, mis en œuvre par un dispositif informatique, ledit module comprenant un référentiel de modèles comportant une pluralité de séries d'instructions chacune correspondant à un modèle d'apprentissage et chacune comportant des valeurs des hyperparamètres, lesdites valeurs étant prédéfinies avant un processus d'apprentissage, des valeurs des paramètres, lesdites valeurs étant calculées pendant l'apprentissage, ledit module de sélection de modèle étant configuré pour :

- évaluer la performance de la prédiction de chaque modèle d'apprentissage, par des indicateurs de performance de la prédiction,
- évaluer la classification, et fournir pour chaque modèle d'apprentissage, au moins une valeur de classification,
- sélectionner un modèle dont la valeur de performance et la valeur de classification sont supérieures à des premières valeurs seuils prédéterminées,
- varier des valeurs des hyperparamètres, à partir d'indicateur d'optimisation des hyperparamètres,
- sélectionner un modèle lorsque la valeur de performance de la prédiction et la valeur de classification sont supérieures à des secondes valeurs seuils prédéterminées et la valeur des hyperparamètres supérieure à une valeur seuil prédéfinie.

L'invention porte en outre sur un **programme de sélection de modèle** comprenant des instructions qui lorsqu'elles sont mises en œuvre par un dispositif informatique, provoquent la mise en œuvre d'un procédé de sélection d'un modèle d'apprentissage selon l'invention.

L'invention porte en outre sur **support d'enregistrement** sur lequel est enregistré un programme de sélection de modèle selon l'invention.

D'autres avantages et caractéristiques de l'invention apparaitront à la lecture de la description suivante donnée à titre d'exemple illustratif et non limitatif, en référence aux Figures annexées:

La figure 1 représente un schéma d'un mode de réalisation du procédé selon l'invention.

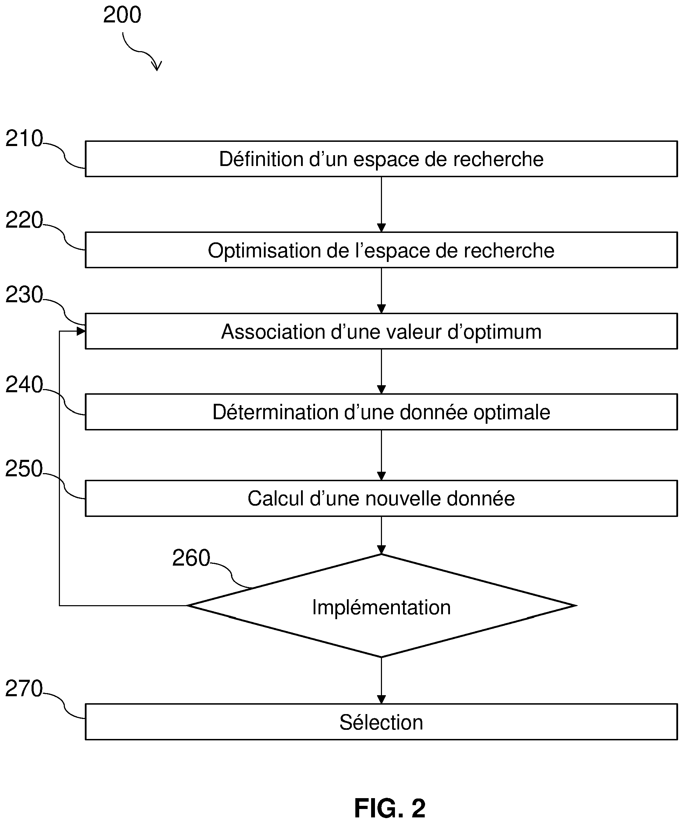

La figure 2 représente un schéma d'une optimisation séquentielle basée sur un modèle d'un mode de réalisation du procédé selon l'invention.

**[Description de l'invention]**

Le terme « **modèle** » ou « **règle** » ou « **algorithme** » ou « **modèle d'apprentissage automatique** » au sens de l'invention peut par exemple correspondre à une suite finie d'opérations ou d'instructions permettant de calculer une valeur par l'intermédiaire d'un classement ou d'un partitionnement des données au sein de groupes préalablement définis Y et d'attribuer un score ou de hiérarchiser une ou plusieurs données au sein d'un classement. La mise en œuvre de cette suite finie d'opérations permet par exemple d'attribuer une étiquette Y à une observation décrite par un ensemble de caractéristiques ou paramètres X grâce par exemple à la mise en œuvre d'une fonction f susceptible, de reproduire Y ayant observé X. Y = f (X) + e où e symbolise le bruit ou erreur de mesure.

On entend par « **seuil prédéterminé** » au sens de l'invention une valeur maximale de paramètre associée à chaque ressource permettant un bon fonctionnement de ladite ressource. Par exemple, cela correspond aux limites maximales acceptables de consommations de ressources pour une infrastructure informatique hébergeant une ou plusieurs briques applicatives. Ces limites peuvent être réelles ou hypothétiques et correspondent généralement à un niveau d'utilisation au-delà duquel des dysfonctionnements peuvent survenir et ayant pour conséquence un arrêt de la ressource, de l'infrastructure informatique ou bien à tout le moins des baisses de qualités de service.

Par « **règles d'exécution** » on entend au sens de l'invention des paramètres prédéterminés d'exécution d'un plan d'ordonnancement dont le respect permet une exécution répondant aux besoins de l'administrateur SI. Ces règles peuvent notamment inclure des ordres d'enchaînement à respecter, des horaires à respecter, ou des seuils de consommation en ressources à respecter, des fonctions prédéterminées à utiliser.

Par « **variable** » on entend au sens de l'invention une caractéristique d'une unité statistique que l'on observe et pour laquelle une valeur numérique ou une catégorie d'une classification peut être attribuée.

Par « **techniques de sélection** » on entend au sens de l'invention une suite finie d'opérations ou d'instructions permettant de calculer une valeur par l'intermédiaire de tests statistiques de type ANOVE, Test de l'information mutuelle entre deux variables aléatoires, Test du Chi$^2$, Tests de régression (e.g. régression linéaire, information mutuelle), SVM, ou élimination récursive, et permettant d'aboutir à un ensemble comprenant des variables pertinentes, notamment les meilleures variables ou les variables les plus pertinentes.

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore contrôleurs industriels. Ainsi, l'infrastructure informatique peut correspondre à un ensemble de d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

L'expression « **indicateur de performance** » ou « **métrique** » au sens de l'invention, correspond à une propriété technique ou fonctionnelle d'un ou de plusieurs éléments d'une infrastructure informatique ou de son environnement représentant les conditions ou l'état de fonctionnement de ladite infrastructure informatique. En outre, un indicateur de performance peut correspondre à une combinaison de propriétés ou à des transformations mathématiques de propriétés. Par exemple, un indicateur de performance peut correspondre à la dérivée d'une propriété d'un élément de l'infrastructure informatique ou bien à un rapport entre les propriétés de deux éléments de l'infrastructure informatique.

L'expression « **valeur de l'indicateur de performance** » ou « **valeur de la métrique** » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

Le terme « **apprentissage** » au sens de l'invention correspond à un procédé conçu pour définir une fonction f permettant de calculer une valeur de Y à partir d'une base de n observations labelisées (X1...n, Y1...n) ou non labelisées (X1...n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

On entend par « **traiter** », « **calculer** », « **exécuter** », « **déterminer** », « **afficher »,** « **extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

L'expression « **capteurs de production industrielle** » au sens de l'invention peut correspondre à des objets connectés. Les capteurs de production industrielle pourront en particulier correspondre à des capteurs machines, dédié à la mesure de données relative à des machines, de préférence des machines de production telles que des machines industrielles. Ainsi, les capteurs de production industrielles pourront générer des données exprimées en vitesse (e.g. tours par minute), cadence, poids ou tout autres unités utiles dans un contexte industriel. Les capteurs de production industrielle pourront aussi correspondre à des capteurs d'environnement capables par exemple de mesure la température, la pression l'humidité. Les capteurs de production industrielle pourront en particulier correspondre à des sondes informatiques.

L'expression « **processus industriels** » au sens de l'invention peut correspondre à un processus de production de biens de consommation pouvant par exemple être des objets électroniques, des objets mécaniques, des aliments, ou encore substances pharmaceutiques ou phytopharmaceutiques. En outre, un processus industriel pourra être contrôlé par l'intermédiaire d'une infrastructure informatique. Ainsi une surveillance d'un processus industriel pourra correspondre à la surveillance d'une infrastructure informatique.

On entend par « **dispositif informatique** » tout dispositif informatique ou toute infrastructure informatique comprenant une ou plusieurs ressources matérielles et/ou logicielles configurées pour envoyer et/ou recevoir des flux de données et pour les traiter. Le dispositif informatique peut être un serveur informatique.

On entend par « **Fournisseurs de données** », tout capteurs (tels que des capteurs de production industrielle), sondes (telles que des sondes informatiques) ou programmes informatiques capables de générer des données de suivi de processus industriels. Ils peuvent aussi correspondre à des dispositifs informatiques tels que des serveurs gérant les données générées par des capteurs, des sondes ou des programmes informatiques.

Dans la suite de la description, les mêmes références sont utilisées pour désigner les mêmes éléments.

Comme cela a été mentionné, l'apprentissage automatisé constitue une part majeure de la quatrième révolution industrielle. Ainsi, les processus industriels sont de plus en plus fréquemment améliorés, via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données. Une fois ces données traitées, elles permettent l'entrainement d'un modèle d'apprentissage. Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, tout changement de variables non prise en compte par le modèle d'apprentissage peut entrainer une diminution de la performance de prédiction de celui-ci et ainsi influer sur la réactivité des processus de contrôle ou pire un manque de sensibilité.

Cela peut engendrer des risques pour les processus industriels contrôlés mais également pour les personnes travaillant au contact de ces processus industriels. Pour éviter ces problèmes techniques d'arrêt d'exploitation des processus industriels, les inventeurs ont développé de nouveaux processus automatisés pour l'analyse en continue du modèle d'apprentissage utilisé.

En particulier, comme cela sera détaillé par la suite, les inventeurs ont développé un système et un procédé de sélection d'un modèle d'apprentissage. Avantageusement, un système et un procédé de sélection d'un modèle d'apprentissage selon l'invention permettront de d'évaluer constamment le modèle d'apprentissage utilisé, l'adapter ou remplacer par un modèle d'apprentissage plus à même d'interpréter un jeu de données.

Pour cela, les inventeurs ont donc proposé un procédé de sélection d'un modèle d'apprentissage permettant d'évaluer les performances de prédiction et de classification du modèle d'apprentissage couramment utilisé et la sélection d'un modèle d'apprentissage plus pertinent pour l'interprétation d'un jeu de données étudié.

En particulier, les inventeurs proposent un procédé et un système permettant la sélection dynamique d'un modèle d'apprentissage adapté à un jeu de données. En effet, au sein d'un système complexe (par exemple un processus industriel, un ensemble de serveurs, d'applications ou d'équipements au sein d'un centre de données), certaines anomalies peuvent causer de graves problèmes d'exploitation par exemple par un effet de cascade. Or, il est nécessaire de pouvoir disposer d'un modèle d'apprentissage robuste et adaptable, afin d'éviter une dégradation de la prédiction du modèle d'apprentissage empêchant la détection de l'apparition future de pannes ou d'anomalies.

L'invention porte donc sur un **procédé 100 de sélection d'un modèle d'apprentissage défini notamment par des paramètres et des hyperparamètres parmi une pluralité de modèles d'apprentissage.** Le jeu de données pourra en particulier être mis en œuvre au sein d'un modèle d'apprentissage automatique pouvant être utilisé pour la surveillance d'un processus industriel.

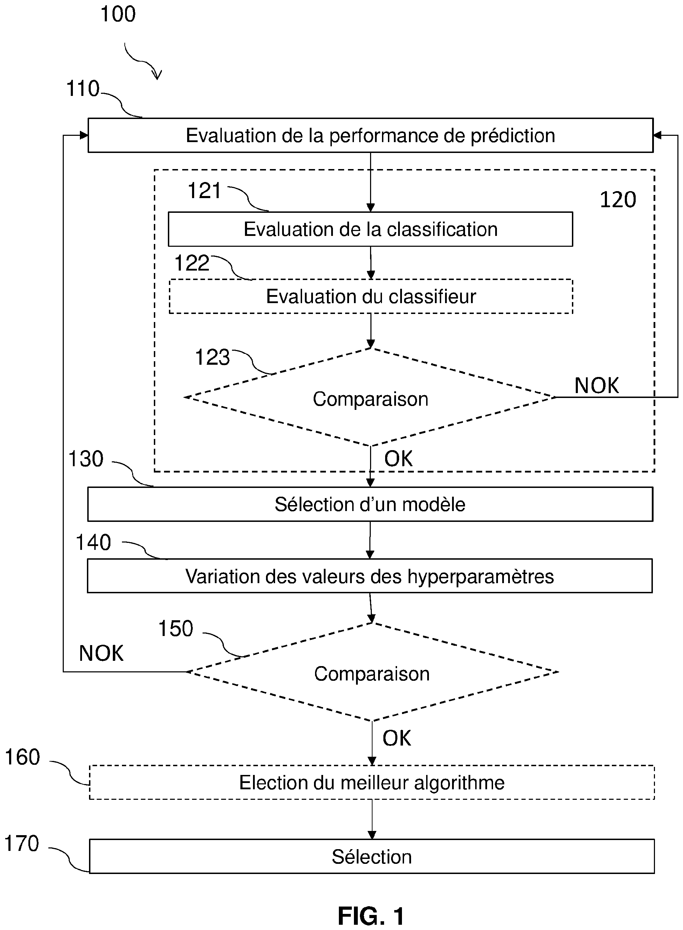

En particulier, comme cela est illustré à la figure 1 procédé 100 de sélection d'un modèle d'apprentissage comprend une étape d'évaluation 110 de la performance de la prédiction de chaque modèle d'apprentissage, un traitement d'évaluation 120 comportant une étape d'évaluation 121 de classification, une étape de sélection 130 d'un modèle, une étape de variation 140 des valeurs des hyperparamètres, une étape de sélection 170 d'un modèle.

Un tel procédé 100 de sélection d'un modèle d'apprentissage est avantageusement mis en œuvre par un dispositif informatique comprenant une unité de traitement, un module de sélection de modèles et un référentiel de modèles stocké en mémoire ou bien sur un serveur dédié et accessible via un bus de communication filaire ou au travers d'un réseau de communication.

De plus, le procédé 100 de sélection d'un modèle d'apprentissage pourra recevoir en continue un jeu de données, de préférence prétraitées, afin d'évaluer le modèle d'apprentissage automatique couramment utilisé pour la surveillance d'un processus industriel. De façon préférée, dans le cadre d'un procédé selon l'invention, la transmission du jeu de données, de préférence prétraitées, au modèle d'apprentissage automatique se fait en temps réel.

En outre, dans le cadre d'un procédé selon l'invention, l'évaluation de la performance du modèle d'apprentissage est de préférence réalisée en continu. L'évaluation en continu correspond par exemple à des mesures ou des traitements réalisés à une fréquence inférieure ou égale à une heure, de préférence inférieure ou égale à trente minutes, de façon plus préférée inférieure ou égale à cinq minutes, par exemple inférieure ou égale à dix secondes. Le module de sélection de modèles est configuré pour déterminer un modèle de prédiction adapté à un jeu de données lui étant soumis et comportant des variables ou paramètres. De tels variables ou paramètres peuvent par exemple correspondre à des indicateurs de performance d'une infrastructure informatique de calcul haute performance tels que : l'utilisation des ressources, les historique des événements, les erreurs logicielles, les erreurs matérielles, les temps de réponse, le trafic des applications, la charge de service, le trafic réseau, des modifications de fichiers, le nombre d'utilisateurs d'un service, le nombre de session, le nombre de processus, des valeurs de températures, des valeurs d'hygrométrie, et la consommation électrique. En particulier, les indicateurs de performance peuvent inclure : le débit du réseau, la latence du réseau, l'utilisation de CPU, l'utilisation de mémoire, le temps de réponse du serveur, le nombre de pages lentes et/ou le nombre de transactions. Les valeurs des indicateurs de performance constituant le jeu de données reçu par le dispositif informatique et utilisés par le modèle de prédiction peuvent être générées par des sondes informatiques dédiées à la surveillance d'indicateurs de performance d'une infrastructure informatique. Ainsi, le procédé selon l'invention trouve notamment son application dans le cadre de l'implémentation d'un modèle de prédiction d'une anomalie, à partir de valeurs d'indicateurs de performance générées par des sondes dédiées à la surveillance d'indicateurs de performance de l'infrastructure informatique. Plus particulièrement, un tel procédé permettra d'adapter le modèle de prédiction en évaluant constamment sa capacité de prédiction et de classification et en les réajustant afin de conserver un modèle de prédiction performant.

Le référentiel de modèles correspond à une base de données comprenant une pluralité d'algorithmes de machine learning de type supervisé et non supervisé. Pour permettre l'implémentation de ces algorithmes de machine learning, le dispositif informatique peut intégrer des librairies telles que par exemple Scikit-learn ou SciPy de Python.

Ainsi, le référentiel de modèles peut comprendre des algorithmes non-supervisés de type K-Means, de type « DBSCAN » pour density-based spatial clustering of applications with noise, ou encore de type Clustering hiérarchique.

Le référentiel de modèles peut en outre comprendre des algorithmes supervisés de type régression multiple (Ordinary Least Square, Lasso, Ridge, ElasticNet, Régression Logistique), de type réseau de neurones : Multi-Layer Perceptron (MLP), de type SVM pour « Support Vector Machine », de type AdaBoost, de type Random Forest, ou encore de type K-plus proche voisins.

Le dispositif informatique selon l'invention pourra avantageusement être adapté pour s'intégrer à un système de calculateurs hautes performances ou plus généralement à tout système mettant en œuvre un modèle de prédiction basé sur des techniques d'apprentissage supervisé ou non supervisé.

Un des principaux enjeux pour l'utilisation d'un modèle de prédiction concerne sa capacité à pouvoir anticiper l'apparition d'anomalie dans un système. Plus particulièrement, dans le cadre de systèmes informatiques de calcul haute performance, il convient de pouvoir anticiper l'apparition de pannes ou encore d'une baisse de la qualité des services fournies. Bien entendu, de tels systèmes informatiques sont en constante évolution, de nouvelles briques matérielles (i.e ressources informatique) ou logicielles sont bien souvent ajoutées. Afin de fournir un modèle de prédiction le plus pertinent possible, un procédé 100 de sélection d'un modèle d'apprentissage selon l'invention comprend une étape d'évaluation 110 de la performance de prédiction de chaque modèle d'apprentissage, par des indicateurs de performance de prédiction.

Pour cela l'étape d'évaluation 110 peut mettre en œuvre différentes méthodes telles que la validation croisée qui consiste à créer un échantillon d'entraînement, notamment à partir d'un jeu de données d'apprentissage comportant par exemple des indicateurs de performance d'une infrastructure informatique de calcul haute performance sur lequel on va constituer le modèle. Le jeu de données d'apprentissage comprendra avantageusement des indicateurs de performance caractérisant un comportement « normal » de l'infrastructure de calcul haute performance qui pourra être associé au fonctionnement de l'infrastructure dans laquelle aucun des indicateurs de performance n'est en anomalie. Un jeu de données test est ensuite utilisé, notamment un jeu de données comprenant des indicateurs de performance, sur lequel le modèle de prédiction sera testé.

L'étape d'évaluation 110 peut ainsi correspondre à :

- la méthode « LOOCV » (pour Leave-One-Out Cross-Validation) qui consiste à sortir une observation « i » de l'ensemble du jeu de données et à calculer le modèle sur les m - 1 données restantes. Ce modèle de validation est utilisé pour prédire i et permet de calculer l'erreur de prévision. Le processus est répété pour toutes les valeurs de i = 1, ..., m. Les m erreurs de prévision sont utilisées pour évaluer la performance du modèle.
- La méthode K-Fold : les données sont aléatoirement divisées en k sous-échantillons de tailles égales, dont l'un est utilisé pour la prévision et les k - 1 restants pour l'estimation du modèle. Le processus est répété k-fois.

Pour évaluer la qualité du modèle et de sa performance en prévision, l'étape d'évaluation 110 permet la détermination d'indicateurs de performance de prédiction du modèle.

A titre d'exemples non limitatifs, l'étape d'évaluation 110 peut consister en la détermination d'indicateurs de performance en lien avec le modèle de régression mis en œuvre par le modèle de prédiction, tels que notamment :

- La déviation moyenne absolue (MAE pour Mean Absolute Error). La déviation absolue d'un élément d'un ensemble de données est la différence absolue entre cet élément et un point donné. La déviation absolue moyenne d'un ensemble est quant à elle la moyenne (ou valeur prévue) des déviations absolues par rapport à la moyenne.
- L'erreur quadratique moyenne (RMSE, pour Root Mean Squared Error). Elle permet de mesurer les résidus entre les valeurs prédites et observées par un modèle ou un classifieur. L'erreur quadratique moyenne représente la racine carrée du deuxième moment d'échantillon des différences entre les valeurs prédites et les valeurs observées ou la moyenne quadratique de ces différences.
- Le coefficient de détermination $R^2$. Cela correspond à une mesure de la qualité de la prédiction d'une régression linéaire.

Ainsi, il est possible d'établir une adéquation du modèle de prédiction utilisé en fonction des paramètres spécifiés, tels que les indicateurs de performance d'un système informatique telle que l'infrastructure informatique de calcul haute performance évoquée précédemment.

Afin d'évaluer la capacité de prédiction et de classification du modèle de prédiction utilisé, le procédé 100 comprend un traitement d'évaluation 120 comportant une étape d'évaluation 121 de classification, par le module de sélection de modèles, permettant de fournir, pour chaque modèle d'apprentissage, au moins une valeur de classification.

En effet, pour la classification, les modèles de prédiction sont évalués selon le score obtenu à partir de leur matrice de confusion (notamment à partir de leur score F), cette matrice évaluant leur capacité de prédiction et de classification sur le jeu de données utilisé.

Le module de sélection de modèles est ainsi configuré, à l'instar d'un classifieur de classe 2, pour fournir deux types de réponse concernant les éléments du jeu de données à prédire. La réponse fournie par le module de sélection de modèles peut être évaluée à partir des éléments du jeu de données connus qui comporte les réponses attendues.

Ainsi, la matrice de confusion comprend pour chaque élément du jeu de données à prédire :

- La réponse prédite (positif ou négatif),
- La réponse observée (positif ou négatif),
- Le nombre de réponses correctement prédites (vrai positif « VP » ou vrai négatif « VN »),
- Le nombre de réponses faussement prédites (faux positif « FP » ou faux négatif « FN »).

A partir de cette matrice de confusion, l'étape d'évaluation 121 de classification est configurée pour déterminer au moins une valeur de classification telle que :

- la précision qui reflète le taux de bonne classification : précision =VP/(VP+FP).
- le rappel ou sensibilité ou Taux de Vrais Positifs TVP, qui correspond à la proportion d'éléments bien classés par rapport au nombre d'éléments de la classe à prédire :

$$TVP=VP/(VP+FN).$$

- le Taux de Faux Positifs : TFP=FP/(FP+VN).
- le score de pertinence calculé à partir de la moyenne harmonique de la précision et du rappel. Le score est également désigné sous le nom de F score, la précision et le rappel sont pondérés de façon égale : F score=2*(precisio·rappel)/(precision+rappel).

En outre, afin d'estimer la fiabilité du module de sélection de modèles, plus particulièrement de la fonction de classification du module de sélection de modèles, le traitement d'évaluation 120 peut comporter une étape d'évaluation 122 du classifieur permettant de générer un indicateur de fiabilité. Pour cela, la fiabilité du module de sélection de modèles peut être évaluée par l'intermédiaire de seuils de pertinence. Un seuil de pertinence peut être défini pour chaque réponse prédite par le module de sélection de modèles (positif et négatif) dans la matrice de confusion.
Ainsi, le F score déterminé pour chaque réponse prédite peut-être comparée à un seuil de pertinence prédéterminé. Notamment, si le F score est supérieur au seuil prédéterminé de pertinence, plus les nombres de vrais et de faux positifs augmentent, et plus le module de sélection de modèles peut être considéré comme fiable dans sa capacité de prédiction.
Dans le cas d'un classifieur binaire, la fiabilité peut aussi être représentée au moyen d'un graphique appelé courbe ROC (pour « Receiver Operating Characteristic » selon une terminologie anglo-saxonne). L'étape d'évaluation 122 du classifieur peut ainsi permettre la détermination du taux de vrais positifs (TVP) en générant une courbe ROC représentant TVP en fonction de TFP pour plusieurs valeurs de seuil de pertinence. Si « s » représente le seuil de classification, cela revient donc à calculer les couple (TFP(s), TVP(s)), soit en reprenant les équations ci-après :

$$TVP(s) = \frac{VP(s)}{VP(s) + FN(s)} = \int_{s}^{\infty} f_1(x) \, dx$$

$$TFP(s) = \frac{VP(s)}{FP(s) + VN(s)} = \int_{s}^{\infty} f_0(x) \, dx$$

où $f_0(x)$ (respectivement fi(x)) est la densité de probabilité lorsque la réponse donnée est considéré comme fausse (respectivement juste).
En outre, le traitement d'évaluation 120 peut comporter une étape de comparaison 123 des indicateurs de performance de prédiction ou des valeurs de classification respectivement déterminés lors des étapes d'évaluation 110 de la performance de prédiction et/ou d'évaluation 121 de classification et d'évaluation 122 du classifieur.
De manière avantageuse, les seuils de valeurs de prédiction prédéterminés peuvent comprendre un ou plusieurs seuils de prédiction concernant le ou les indicateurs de performance de prédiction déterminés lors de l'étape d'évaluation 110 de la performance de prédiction et un ou plusieurs seuils de prédiction concernant le ou les valeurs de classification déterminées lors de l'étape d'évaluation 121 de classification et d'évaluation 122 du classifieur.
Lorsque l'étape de comparaison 123 des indicateurs de performance de prédiction ou des valeurs de classification permet de déterminer que les valeurs respectives des indicateurs de performance de prédiction et /ou des valeurs de classification sont inférieures 123-NOK aux valeurs seuils de prédiction prédéterminés, le modèle de prédiction ou d'apprentissage est considéré comme non pertinent pour l'interprétation du jeu de données sur lequel le modèle de prédiction est testé (i.e notamment le jeu de données comprenant des indicateurs de performance d'un système informatique).

Dans ce cas, un nouveau modèle de prédiction est sélectionné et le jeu de données est utilisé pour tester ledit nouveau modèle de prédiction, l'étape d'évaluation 110 de la performance de prédiction est donc réitérée.

Lorsque l'étape de comparaison 123 des indicateurs de performance et/ou des valeurs de classification permet de déterminer que les valeurs respectives des indicateurs de performance et/ou des valeurs de classification sont supérieures 123-OK à des valeurs seuils de prédiction prédéterminés, le modèle de prédiction ou d'apprentissage est considéré comme pertinent pour l'interprétation du jeu de données sur lequel le modèle de prédiction est testé.

Une fois que l'étape d'évaluation 110 de la performance de prédiction et le traitement d'évaluation 120 ont été mises en œuvre pour tous les modèles d'apprentissage stockés dans le référentiel de modèles, un procédé 100 conforme à l'invention comprend la mise en œuvre d'une étape de sélection 130 d'un modèle dont la valeur de performance et la valeur de classification sont supérieures à des premières valeurs seuils prédéterminées.

En effet, comme évoqué précédemment, il convient de ne sélectionner que les modèles de prédiction susceptibles de permettre une interprétation fidèle du jeu de données, ainsi seuls les modèles de prédiction présentant des indicateurs de performance et/ou des valeurs de classification supérieures à des premières valeurs seuils prédéterminées sont sélectionnés.

Afin d'optimiser au maximum les capacités de prédiction du modèle de prédiction, un procédé 100 selon l'invention comprend une étape de variation 140 des valeurs des hyperparamètres, à partir d'indicateurs d'optimisation des hyperparamètres.

Dans le cadre de l'apprentissage automatique, les hyperparamètres sont les paramètres dont les valeurs sont définies avant le début du processus d'apprentissage. Les hyperparamètres se distinguent des autres paramètres, notamment les indicateurs de performance d'un système informatique du jeu de données, dont les valeurs sont calculées lors de l'apprentissage. Par exemple, le nombre de couches dans un perceptron multicouche est un hyperparamètre, mais les poids et les biais du réseau de neurones sont des paramètres calculés lors de l'apprentissage.

En effet, il convient de déterminer les hyperparamètres permettant de générer le meilleur résultat c'est-à-dire la prédiction la plus fidèle.

Pour cela, l'étape de variation 140 des valeurs des hyperparamètres peut être implémentée lorsque la valeur des hyperparamètres est inférieure à la valeur seuil prédéfinie. La valeur des hyperparamètres peut correspondre à une mesure de performance pour chacun des hyperparamètres comme par exemple la fonction coût à optimiser.

De manière avantageuse, l'étape de variation 140 des valeurs des hyperparamètres peut comprendre la mise en œuvre de :

- une optimisation hyper-paramétrique par quadrillage ou balayage de paramètres, ou
- une optimisation hyper paramétrique par recherche aléatoire, ou
- une optimisation séquentielle 200 basée sur un modèle.

L'optimisation hyper-paramétrique par quadrillage ou balayage de paramètres plus connue sous la terminologie anglo-saxonne « Grid Search » consiste simplement en une recherche exhaustive à travers un sous-ensemble spécifié de l'espace des hyperparamètres d'un algorithme d'apprentissage. Pour chacun des points de l'espace, une mesure de performance est effectuée. Le point donnant la meilleure performance est retenu pour être celui qui représente les hyperparamètres les plus pertinents, à sélectionner.

Par exemple, un algorithme de type SVM (machine à vecteurs de support) avec un noyau gaussien a au moins deux hyperparamètres à optimiser : une constante de régulation et un hyperparamètre du noyau, qui sont des hyperparamètres continus.

L'optimisation par Grid Search calcule ainsi la performance de l'algorithme SVM pour chaque paire issue du produit cartésien de deux sous-ensembles. Enfin, la méthode retourne les paramètres qui ont atteint le score le plus élevé.

L'un des inconvénients majeurs de cette méthode concerne le dimensionnement de l'espace de recherche. En effet, quand le nombre d'hyperparamètres augmente, le nombre d'éléments de la « grille » de recherche augmente exponentiellement ce qui augmente considérablement le temps de calcul nécessaire pour évaluer toutes les métriques applicables par modèle de prédiction d'une part pour la régression et d'autre part pour la classification.

L'optimisation hyper paramétrique par recherche aléatoire plus connue sous la terminologie anglo-saxonne « Random Search » consiste en une recherche aléatoire permettant d'échantillonner les paramètres un nombre de fois fixe. C'est souvent parce qu'il s'avère que certains hyperparamètres n'influent pas de manière significative sur la perte de performance.

L'optimisation séquentielle 200 basée sur un modèle, plus connue sous la terminologie anglo-saxonne « Sequential Model-Based Optimization » utilise les observations antérieures de la fonction coût f, pour déterminer le point suivant (optimal) afin d'échantillonner la fonction coût. De manière préférée, l'optimisation séquentielle 200 basée sur un modèle peut comprendre la mise en œuvre d'un Algorithme bayésien comportant une étape 210 de définition d'un espace de recherche.

L'espace de recherche comprend tous les hyperparamètres en lien avec le jeu de données à tester.

Ensuite, l'optimisation séquentielle 200 basée sur un modèle comprend une étape d'optimisation 220 de l'espace de recherche comprenant la caractérisation de chaque donnée de l'espace de recherche, notamment les hyperparamètres par des valeurs.

L'optimisation bayésienne fonctionne en construisant une distribution postérieure des fonctions (processus gaussien) qui décrit le mieux la fonction à optimiser. À mesure que le nombre d'observations augmente, la distribution postérieure s'améliore et l'optimisation séquentielle 200 basée sur un modèle devient plus sûre au niveau des régions de l'espace des paramètres qui valent la peine d'être explorées et de celles qui ne le sont pas.

L'étape d'optimisation 220 de l'espace de recherche met en œuvre un processus gaussien ajusté aux échantillons connus (points précédemment explorés), et est une généralisation de la distribution gaussienne à une distribution par rapport aux fonctions, au lieu de variables aléatoires. Le processus Gaussien est complètement spécifié par une fonction de la moyenne et une fonction de covariance. Un processus Gaussien retourne la moyenne et la variance d'une distribution normale pour tout point x du domaine de f. Il induit une probabilité *a posteriori* sur la fonction coût, qui permet de mettre à jour la croyance sur f après chaque calcul de celle-ci sur le point le plus optimal qui reste à trouver en se reposant sur une fonction d'acquisition.

L'optimisation séquentielle 200 basée sur un modèle comprend ainsi une étape d'association 230 à chaque donnée de l'espace de recherche optimisé d'une valeur d'optimum en fonction d'une fonction d'acquisition.

En effet, pour trouver le meilleur futur point pour évaluer f, on choisit le point qui maximise une fonction d'acquisition. Cette fonction décrit l'utilité pour toutes les valeurs du domaine de f (ici, les hyperparamètres). Les valeurs dont l'utilité est maximale seront choisies pour évaluer la prochaine valeur de la fonction coût f.

Une telle fonction d'acquisition peut être une fonction de l'amélioration espérée.

A partir de la fonction de l'amélioration espérée, l'optimisation séquentielle 200 basée sur un modèle comprend une étape de détermination 240 d'une donnée optimale pour laquelle la fonction d'acquisition est maximisée.

La fonction de l'amélioration espérée est définie comme :

$$EI(x) = \mathbb{E}[max\{0, f(x) - f\hat{x}\}]$$

où $\hat{x}$ est le point courant optimal. Maximiser cette quantité revient à trouver le point espéré qui améliorer la fonction f.

L'espérance peut être calculée sous un modèle de processus Gaussien en utilisant l'intégration par partie :

$$\begin{cases} (\mu(x) - f(\hat{x}))\Phi(Z) + \sigma(x)\phi(Z) & \text{if } \sigma(x) > 0 \\ 0 & \text{if } \sigma(x) = 0 \end{cases}$$

où $Z = \frac{\mu(x) - f(\hat{x})}{\sigma(x)}$ ; $\Phi(Z)$ et $\varphi(Z)$ représentent respectivement la fonction de répartition et la densité de probabilité de la loi normale.

Il est donc possible de déduire que cette dernière fonction aura des valeurs plus élevées lorsque :

- La valeur a posteriori $\mu(x)$ est plus grande que la meilleure valeur courante $f(\hat{x})$ ;
- L'incertitude $\sigma(x)$ autour de x est grande.

Ainsi, l'optimisation séquentielle 200 basée sur un modèle comprend un calcul 250 d'une nouvelle donnée à partir de la donnée optimale et de la fonction d'acquisition maximisée, une étape 260 d'implémentation de l'espace de recherche optimisée comprenant la nouvelle donnée calculée, et la sélection 270 des valeurs optimisées des valeurs de paramètres associées à chaque fonction de transformation en fonction des données optimisées lorsque l'espace de recherche est implémenté.

Un procédé 100 de sélection d'un modèle d'apprentissage peut en outre comprendre une étape de comparaison 150 simultanée des résultats d'analyse des différents modèles, notamment la valeur des hyperparamètres et plus particulièrement la mesure de performance pour chacun des hyperparamètres telle que la fonction coût à optimiser.

De manière avantageuse, l'étape de comparaison 150 simultanée des résultats d'analyse des différents modèles peut consister en une comparaison de la fonction de coût à optimiser de chacun des hyperparamètres à une valeur seuil, si ladite fonction coût à optimiser est supérieure 150-OK à la valeur seuil, alors le modèle de prédiction correspondant est considéré comme pertinent pour l'interprétation du jeu de données sur lequel le modèle de prédiction est testé (i.e notamment le jeu de données comprenant des indicateurs de performance d'un système informatique).

Lorsque l'étape de comparaison 150 simultanée des résultats d'analyse des différents modèles permet de déterminer que la fonction coût à optimiser est inférieure 150-NOK à la valeur seuil, le modèle de prédiction ou d'apprentissage est considéré comme non pertinent pour l'interprétation du jeu de données sur lequel le modèle de prédiction est testé.

Un procédé 100 de sélection d'un modèle d'apprentissage peut en outre comprendre une étape d'élection 160 du meilleur algorithme et sa soumission à l'utilisateur.

Enfin, un procédé 100 de sélection d'un modèle d'apprentissage selon l'invention comprend une étape de sélection 170 d'un modèle lorsque la valeur de performance de la prédiction et la valeur de classification sont supérieures à des secondes valeurs seuils prédéterminées et la valeur des hyperparamètres supérieure à une valeur seuil prédéfinie. Cela permet ainsi de sélectionner le modèle de prédiction permettant d'adapter le plus fidèlement le jeu de données fournis tout en comprenant des hyperparamètres optimisés.

## Revendications

1. Procédé (100) de sélection d'un modèle d'apprentissage défini notamment par des paramètres et des hyperparamètres parmi une pluralité de modèles d'apprentissage, mis en œuvre par un dispositif informatique, ledit dispositif informatique comprenant un module de sélection de modèle et un référentiel de modèle comportant une pluralité de séries d'instructions chacune correspondant à un modèle d'apprentissage et chacune comportant des valeurs des hyperparamètres, ledit procédé comprenant :

   - une étape d'évaluation (110) de la performance de la prédiction de chaque modèle d'apprentissage, par des indicateurs de performance de prédiction,
   - un traitement d'évaluation (120) comportant une étape d'évaluation (121) de classification, par le module de sélection de modèles, permettant de fournir, pour chaque modèle d'apprentissage, au moins une valeur de classification,
   - une étape de sélection (130) d'un modèle dont la valeur de performance et la valeur de classification sont supérieures à des premières valeurs seuils prédéterminées,
   - une étape de variation (140) des valeurs des hyperparamètres, à partir d'indicateurs d'optimisation des hyperparamètres,
   - une étape de sélection (170) d'un modèle lorsque la valeur de performance de la prédiction et la valeur de classification sont supérieures à des secondes valeurs seuils prédéterminées et la valeur des hyperparamètres supérieure à une valeur seuil prédéfinie.

2. Procédé (100) selon la revendication précédente, **caractérisé en ce que** l'étape de variation (140) des valeurs des hyperparamètres est implémentée lorsque la valeur des hyperparamètres est inférieure à la valeur seuil prédéfinie, ladite étape de variation (140) des valeurs des hyperparamètres comprenant la mise en œuvre de :

   - une optimisation hyper-paramétrique par quadrillage ou balayage de paramètres, ou
   - une optimisation hyper paramétrique par recherche aléatoire, ou
   - une optimisation séquentielle (200) basée sur un modèle.

3. Procédé (100) selon la revendication 1, **caractérisé en ce que** l'étape de variation (140) des valeurs des hyperparamètres est implémentée lorsque la valeur des hyperparamètres est inférieure à la valeur seuil prédéfinie, ladite étape de variation (140) des valeurs des hyperparamètres comprenant d'une optimisation séquentielle (200) basée sur un modèle, ladite optimisation séquentielle (200) basée sur un modèle comprend la mise en œuvre d'un Algorithme bayésien comportant :

   - une étape (210) de définition d'un espace de recherche,
   - une étape (220) d'optimisation de l'espace de recherche comprenant la caractérisation de chaque donnée de l'espace de recherche par des valeurs,
   - une étape (230) d'association à chaque donnée de l'espace de recherche optimisé d'une valeur d'optimum en fonction d'une fonction d'acquisition,
   - une étape (240) de détermination d'une donnée optimale pour laquelle la fonction d'acquisition est maximisée,
   - le calcul (250) d'une nouvelle donnée à partir de la donnée optimale et de la fonction d'acquisition maximisée,

- une étape (260) d'implémentation de l'espace de recherche optimisée comprenant la nouvelle donnée calculée,
- la sélection (270) des valeurs optimisées des valeurs de paramètres associées à chaque fonction de transformation en fonction des données optimisées lorsque l'espace de recherche est implémenté.

4.  Procédé (100) selon l'une quelconque des revendications précédentes, **caractérisé en ce qu'**il comprend une étape de comparaison (150) simultanée des résultats d'analyse des différents modèles.

5.  Procédé (100) selon l'une quelconque des revendications précédentes, **caractérisé en ce qu'**il comprend en outre une étape d'élection (160) du meilleur algorithme et sa soumission à l'utilisateur.

6.  Procédé (100) selon l'une quelconque des revendications précédentes, **caractérisé en ce que** le traitement d'évaluation (120) comprend en outre une étape d'évaluation (122) du classifieur permettant de générer un indicateur de fiabilité.

7.  Procédé (100) selon l'une quelconque des revendications précédentes, **caractérisé en ce qu'**il comprend une étape de génération automatique de modèles pour le problème étudié.

8.  Procédé (100) selon l'une quelconque des revendications 1 à 7 **caractérisé en ce que** les paramètres sont définis à partir d'un jeu de données émis par des fournisseurs de données comportant des capteurs de production industrielle et **en ce que** le modèle d'apprentissage sélectionné est entrainé pour la surveillance d'un processus industriel.

9.  Procédé (100) selon la revendication 8, **caractérisé en ce que** les capteurs de production industrielle comportent : des objets connectés, des capteurs machines, capteurs d'environnement et/ ou des sondes informatiques.

10. Procédé (100) selon les revendications 8 ou 9, **caractérisé en ce que** le processus industriel est sélectionné parmi : un processus de production agroalimentaire, un processus de production manufacturière, un processus de synthèse chimique, un processus de conditionnement ou un processus de surveillance d'une infrastructure informatique.

11. Procédé (100 selon l'une quelconque des revendications 8 à 10, **caractérisé en ce que** la surveillance du processus industriel correspond à la surveillance de la sécurité du processus industriel et comporte en particulier une maintenance prédictive, une détection de défaillance, une détection de fraude, et/ou une détection de cyberattaque.

12. Système de sélection d'un modèle d'apprentissage défini notamment par des paramètres et des hyperparamètres parmi une pluralité de modèles d'apprentissage, ledit système comprenant une pluralité de modèles, des valeurs des hyperparamètres, lesdites valeurs étant prédéfinies avant un processus d'apprentissage, des valeurs des paramètres, lesdites valeurs étant calculées pendant l'apprentissage, ledit système comprenant un dispositif informatique comportant un module de sélection de modèle et un référentiel de modèles comportant une pluralité de séries d'instructions chacune correspondant à un modèle d'apprentissage et chacune comportant des valeurs des hyperparamètres, ledit dispositif étant configuré pour :

    - évaluer la performance de la prédiction de chaque modèle d'apprentissage, par des indicateurs de performance de la prédiction,
    - évaluer la classification, par le module de sélection de modèle, et fournir pour chaque modèle d'apprentissage, au moins une valeur de classification,
    - sélectionner un modèle dont la valeur de performance et la valeur de classification sont supérieures à des premières valeurs seuils prédéterminées,
    - varier des valeurs des hyperparamètres, à partir d'indicateurs d'optimisation des hyperparamètres,
    - sélectionner d'un modèle lorsque la valeur de performance de la prédiction et la valeur de classification sont supérieures à des secondes valeurs seuils prédéterminées et la valeur des hyperparamètres supérieure à une valeur seuil prédéfinie.

13. Module de sélection d'un modèle défini notamment par des paramètres et des hyperparamètres, mis en œuvre par un dispositif informatique, ledit module comprenant un référentiel de modèles comportant une pluralité de séries d'instructions chacune correspondant à un modèle d'apprentissage et chacune comportant des valeurs des hyperparamètres, lesdites valeurs étant prédéfinies avant un processus d'apprentissage, des valeurs des paramètres, lesdites valeurs étant calculées pendant l'apprentissage, ledit module de sélection de modèle étant configuré pour :

    - évaluer la performance de la prédiction de chaque modèle d'apprentissage, par des indicateurs de performance de la prédiction,

- évaluer la classification, et fournir pour chaque modèle d'apprentissage, au moins une valeur de classification,
- sélectionner un modèle dont la valeur de performance et la valeur de classification sont supérieures à des premières valeurs seuils prédéterminées,
- varier des valeurs des hyperparamètres, à partir d'indicateur d'optimisation des hyperparamètres,
- sélectionner d'un modèle lorsque la valeur de performance de la prédiction et la valeur de classification sont supérieures à des secondes valeurs seuils prédéterminées et la valeur des hyperparamètres supérieure à une valeur seuil prédéfinie.

14. Programme de sélection d'un modèle comprenant des instructions qui lorsqu'elles sont mises en œuvre par un dispositif informatique, provoquent la mise en œuvre d'un procédé de sélection d'un modèle d'apprentissage selon l'une des revendications 1 à 11.

15. Support d'enregistrement sur lequel est enregistré le programme de sélection d'un modèle selon la revendication 14.

**FIG. 1**

200

210 — Définition d'un espace de recherche

220 — Optimisation de l'espace de recherche

230 — Association d'une valeur d'optimum

240 — Détermination d'une donnée optimale

250 — Calcul d'une nouvelle donnée

260 — Implémentation

270 — Sélection

FIG. 2

Europäisches
Patentamt

European
Patent Office

Office européen
des brevets

**RAPPORT DE RECHERCHE EUROPEENNE**

Numéro de la demande

EP 20 21 8023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/132787 A1 (MASSACHUSETTS INST TECHNOLOGY [US]) 12 mai 2016 (2016-05-12) * figures 1-7 * * alinéas [0002] - [0020] * * alinéas [0069] - [0079] * * alinéas [0101] - [0160] * ----- | 1-15 | INV. G06N5/00 G06N20/00 |
| A | CHATELAIN C. ET AL.: "A multi-model selection framework for unknown and/or evolutive misclassification cost problems", PATTERN RECOGNITION, ELSEVIER, GB, vol. 43, no. 3, 21 juillet 2009 (2009-07-21), pages 815-823, XP026783245, ISSN: 0031-3203, DOI: 10.1016/J.PATCOG.2009.07.006 [extrait le 2009-07-21] * le document en entier * ----- | 1-15 | |
| A | YOUNG M TODD ET AL: "HyperSpace: Distributed Bayesian Hyperparameter Optimization", 2018 30TH INTERNATIONAL SYMPOSIUM ON COMPUTER ARCHITECTURE AND HIGH PERFORMANCE COMPUTING (SBAC-PAD), IEEE, 24 septembre 2018 (2018-09-24), pages 339-347, XP033521337, DOI: 10.1109/CAHPC.2018.8645954 [extrait le 2019-02-20] * Sections 1 à 3 * ----- | 1-15 | DOMAINES TECHNIQUES RECHERCHES (IPC)   G06N |
| A | US 2019/258904 A1 (SAS INST INC [US]) 22 août 2019 (2019-08-22) * figures 1-2C, 17 * * alinéas [0028] - [0039], [0042] * * alinéas [0069] - [0150] * * alinéas [0173], [0184] * ----- -/-- | 1-15 | |

Le présent rapport a été établi pour toutes les revendications

| Lieu de la recherche | Date d'achèvement de la recherche | Examinateur |
|---|---|---|
| La Haye | 26 mai 2021 | Millet, Guillaume |

page 1 de 2

Europäisches
Patentamt

European
Patent Office

Office européen
des brevets

**RAPPORT DE RECHERCHE EUROPEENNE**

Numéro de la demande

EP 20 21 8023

| | | DOCUMENTS CONSIDERES COMME PERTINENTS | | |
|---|---|---|---|---|
| Catégorie | Citation du document avec indication, en cas de besoin, des parties pertinentes | | Revendication concernée | CLASSEMENT DE LA DEMANDE (IPC) |
| A | Chris Thornton ET AL: "Auto-WEKA : combined selection and hyperparameter optimization of classification algorithms", <br> , <br> 6 mars 2013 (2013-03-06), pages 1-9, XP055723048, <br> New York, New York, USA <br> DOI: 10.1145/2487575.2487629 <br> Extrait de l'Internet: <br> URL:https://arxiv.org/pdf/1208.3719.pdf <br> [extrait le 2020-08-17] <br> * le document en entier * <br> ----- | | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 26 mai 2021 | Millet, Guillaume |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 21 8023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-05-2021

| Document brevet cité au rapport de recherche | Date de publication | Membre(s) de la famille de brevet(s) | Date de publication |
|---|---|---|---|
| US 2016132787 A1 | 12-05-2016 | US 2016132787 A1<br>WO 2016077127 A1 | 12-05-2016<br>19-05-2016 |
| US 2019258904 A1 | 22-08-2019 | AUCUN | |

EPO FORM P0460

Pour tout renseignement concernant cette annexe : voir Journal Officiel de l'Office européen des brevets, No.12/82